(19) Europäisches Patentamt / European Patent Office / Office européen des brevets

(11) **EP 3 385 809 B1**

(12) **FASCICULE DE BREVET EUROPEEN**

(45) Date de publication et mention
de la délivrance du brevet:
**29.07.2020 Bulletin 2020/31**

(21) Numéro de dépôt: **18163902.2**

(22) Date de dépôt: **26.03.2018**

(51) Int Cl.:
**G05D 1/00** *(2006.01)* **B64C 13/50** *(2006.01)*

(54) **SYSTÈME DE COMMANDE DE VOL D'UN AÉRONEF**

FLUGSTEUERUNGSSYSTEM EINES LUFTFAHRZEUGS

FLIGHT CONTROL SYSTEM OF AN AIRCRAFT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.04.2017 FR 1753040**

(43) Date de publication de la demande:
**10.10.2018 Bulletin 2018/41**

(73) Titulaire: **Airbus Operations S.A.S.**
**31060 Toulouse (FR)**

(72) Inventeur: **BROT, Patrice**
**31520 Ramonville (FR)**

(74) Mandataire: **Sarraméa, Claude**
**Airbus Operations (S.A.S)**
**XIF - M0101/1**
**316, route de Bayonne**
**31060 Toulouse Cedex (FR)**

(56) Documents cités:
**FR-A1- 2 996 651**

• **PHILIPPE GOUPIL: "AIRBUS state of the art and practices on FDI and FTC in flight control system", CONTROL ENGINEERING PRACTICE, vol. 19, no. 6, 17 avril 2011 (2011-04-17) , pages 524-539, XP055109000, ISSN: 0967-0661, DOI: 10.1016/j.conengprac.2010.12.009**

**Description**

L'invention est relative à un système de commandes de vol d'un aéronef, prévu pour contrôler des gouvernes de l'aéronef. Les aéronefs modernes, en particulier les avions de transport, comportent un ensemble de calculateurs de commande de vol qui calculent des ordres, appelés ordres de vol dans la suite de la description, qu'ils transmettent à des contrôleurs d'actionneurs de gouvernes de l'aéronef. Ces gouvernes sont par exemple des volets ou des ailerons situés au niveau des ailes de l'aéronef, des gouvernes de profondeur situées par exemple sur un plan horizontal à l'arrière de l'aéronef, une gouverne de direction située sur la dérive, etc. Les calculateurs de commande de vol sont dissimilaires et redondants de telle façon que le système de commande de vol soit robuste à des pannes susceptibles d'affecter certains calculateurs. De plus, généralement, une partie des calculateurs sont utilisés en mode commande (COM) et les autres calculateurs sont utilisés en mode moniteur (MON), un calculateur en mode moniteur surveillant le fonctionnement d'un calculateur en mode commande. Les calculateurs sont ainsi répartis selon des couples COM/MON. Le document FR2.996.651 A1 décrit un système de commande de vol comprenant des calculateurs primaires de commande de vol, dans lequel chaque calculateur primaire participe d'une part en mode commande au sein d'un premier couple commande/moniteur virtuel constitué dudit calculateur et d'un premier des autres calculateurs primaires agissant en mode moniteur pour le compte dudit premier couple commande/moniteur virtuel et d'autre part en mode moniteur au sein d'un deuxième couple commande/moniteur virtuel constitué dudit calculateur et d'un deuxième des autres calculateurs primaires agissant en mode commande pour le compte dudit deuxième couple commande/moniteur virtuel. Ce système de commande de vol présente l'avantage de ne nécessiter qu'un nombre réduit de calculateurs primaires de commande de vol. Le calcul d'un ordre de vol est généralement réalisé en fonction d'au moins un paramètre de vol de l'aéronef. Un tel paramètre de vol de l'aéronef peut être soit de type booléen, correspondant par exemple à un mode de pilotage automatique, à une phase de vol de l'aéronef ou à un type de loi de commande de vol, soit de type numérique, correspondant par exemple à une vitesse de l'aéronef. Chaque calculateur primaire fait l'acquisition dudit au moins un paramètre de vol à partir d'autres calculateurs de l'aéronef ou à partir de capteurs de l'aéronef. Les calculateurs COM et MON d'un même couple COM/MON acquièrent l'au moins un paramètre de vol de façon asynchrone et ils risqueraient de calculer des ordres de vol différents si chacun calculait l'ordre de vol en fonction du paramètre de vol qu'il a acquis. Pour éviter un tel problème, les calculateurs COM et MON doivent calculer un ordre de vol sur la base d'une même valeur de l'au moins un paramètre de vol, afin que le calculateur MON ne détecte pas une anomalie de l'ordre de vol lors d'un changement de valeur de l'au moins un paramètre de vol. Pour cela, les calculateurs COM et MON d'un même couple COM/MON échangent mutuellement les valeurs de l'au moins un paramètre de vol qu'ils ont acquises et ils calculent une valeur consolidée du paramètre de vol sur la base de laquelle ils calculent l'ordre de vol. Dans la mesure où un calculateur primaire participe à deux couples COM/MON comme indiqué précédemment, il doit calculer une valeur consolidée de l'au moins un paramètre de vol, puis une valeur de l'ordre de vol, pour chacun des deux couples auxquels il participe. Cela requiert que chaque calculateur primaire effectue deux fois le calcul de la valeur consolidée du paramètre de vol et le calcul de l'ordre de vol. Cela entraîne une surcharge de calcul très coûteuse car elle nécessite d'accroître les capacités de calcul des calculateurs primaires. Il serait donc opportun de pouvoir effectuer une seule fois le calcul de la valeur consolidée du paramètre de vol et le calcul de l'ordre de vol.

EXPOSE DE L'INVENTION :

La présente invention a notamment pour but d'apporter une solution à ces problèmes. Elle concerne un système de commande de vol d'un aéronef comprenant un ensemble d'au moins quatre calculateurs primaires pour le calcul de commandes de vol de l'aéronef, reliés entre eux par un réseau de communication, dans lequel chacun des au moins quatre calculateurs primaires est configuré pour calculer un ordre de vol destiné à un contrôleur distant d'un actionneur de gouverne de l'aéronef, chacun des calculateurs primaires participant :

- en mode commande au sein d'un premier couple commande/moniteur virtuel constitué dudit calculateur et d'un premier des autres calculateurs primaires agissant en mode moniteur pour le compte dudit premier couple commande/moniteur virtuel ; et
- en mode moniteur au sein d'un deuxième couple commande/moniteur virtuel constitué dudit calculateur et d'un deuxième des autres calculateurs primaires agissant en mode commande pour le compte dudit deuxième couple commande/moniteur virtuel,

dans lequel l'ordre de vol est calculé en fonction d'au moins un paramètre de vol de l'aéronef.

Le système de commande de vol est remarquable en ce que chacun desdits au moins quatre calculateurs primaires est configuré pour :

- acquérir une valeur de l'au moins un paramètre de vol de l'aéronef, transmettre cette valeur aux autres calculateurs primaires et recevoir des valeurs de l'au moins un paramètre de vol de l'aéronef transmises par les autres calculateurs primaires ;

- déterminer une valeur consolidée dudit au moins un paramètre de vol de l'aéronef en fonction de la valeur acquise dudit au moins un paramètre de vol de l'aéronef et des valeurs dudit au moins un paramètre de vol de l'aéronef reçues des autres calculateurs primaires, en utilisant un algorithme de consolidation commun également utilisé par les autres calculateurs primaires pour déterminer chacun une valeur consolidée dudit au moins un paramètre de vol de l'aéronef ;

- calculer l'ordre de vol destiné au contrôleur distant, au moyen d'une loi de calcul, en fonction de la valeur consolidée dudit au moins un paramètre de vol de l'aéronef, selon un calcul unique dont le résultat est utilisé par le calculateur aussi bien lorsqu'il agit en mode commande au sein du premier couple commande/moniteur virtuel que lorsqu'il agit en mode moniteur au sein du deuxième couple commande/moniteur virtuel.

Ainsi, les différents calculateurs primaires du système de commande de vol s'échangent mutuellement les valeurs de l'au moins un paramètre de vol qu'ils acquièrent. Etant donné que les différents calculateurs primaires déterminent chacun une valeur consolidée de l'au moins un paramètre de vol au moyen d'un algorithme de consolidation commun à ces différents calculateurs primaires, ils obtiennent tous la même valeur consolidée du paramètre de vol. Par conséquent, le calculateur primaire participant à deux couples COM/MON (avec d'une part le premier et d'autre part le deuxième des autres calculateurs primaires) peut utiliser la même valeur consolidée du paramètre de vol pour chacun des deux couples COM/MON auxquels il participe, puisque le premier et le deuxième des autres calculateurs primaires utilisent aussi cette même valeur consolidée. Il en résulte que le calculateur primaire peut faire un calcul unique de l'ordre de vol sur la base de la valeur consolidée du paramètre de vol et utiliser le résultat dudit calcul unique pour chacun des couples COM/MON auxquels il participe. Cela permet une réduction très importante de la charge de calcul de chacun des calculateurs primaires.

Dans un mode préféré de réalisation, les calculateurs primaires sont d'au moins deux types, un premier type de calculateurs primaires mettant en œuvre un logiciel d'un premier type pour implémenter la loi de calcul de l'ordre de vol et, un deuxième type de calculateurs primaires mettant en œuvre un logiciel d'un deuxième type pour implémenter la loi de calcul de l'ordre de vol, le logiciel du premier type et le logiciel du deuxième type étant dissimilaires.

Dans un premier mode de réalisation, l'au moins un paramètre de vol de l'aéronef est un paramètre de type booléen tel qu'un changement de la valeur consolidée de l'au moins un paramètre de vol de l'aéronef correspond à une transition de la loi de calcul de l'ordre de vol.

De façon avantageuse, l'algorithme de consolidation commun utilisé par les calculateurs primaires pour déterminer la valeur consolidée de l'au moins un paramètre de vol de type booléen est configuré de façon à déterminer une valeur consolidée dudit au moins un paramètre de vol correspondant à une transition de la loi de calcul de l'ordre de vol, lorsqu'au moins la moitié des valeurs dudit au moins un paramètre de vol de l'aéronef utilisées pour la consolidation, d'une part correspondent à une transition de la loi de calcul de l'ordre de vol et, d'autre part proviennent d'au moins un calculateur du premier type et d'au moins un calculateur du deuxième type.

De façon particulière, une valeur dudit au moins un paramètre de vol correspond à une transition de la loi de calcul de l'ordre de vol lorsque cette valeur est égale à « VRAI », le nombre de calculateurs primaires est égal à quatre calculateurs primaires répartis en deux calculateurs primaires du premier type et deux calculateurs primaires du deuxième type et, l'algorithme de consolidation commun utilisé par les calculateurs primaires pour déterminer la valeur consolidée de l'au moins un paramètre de vol de type booléen est configuré de façon à déterminer la valeur consolidée dudit au moins un paramètre de vol en utilisant la formule suivante :

$$Vcon = (V1A \text{ OU } V4A) \text{ ET } (V2B \text{ OU } V3C)$$

dans laquelle :

Vcon est la valeur consolidée dudit au moins un paramètre de vol,
V1A et V4A sont les valeurs dudit au moins un paramètre de vol provenant respectivement des deux calculateurs primaires du premier type ; et
V2B et V3B sont les valeurs dudit au moins un paramètre de vol provenant respectivement des deux calculateurs primaires du deuxième type.

Dans un deuxième mode de réalisation, l'au moins un paramètre de vol de l'aéronef est un paramètre de type numérique et chacun des au moins quatre calculateurs primaires est configuré pour déterminer si la valeur consolidée de l'au moins un paramètre de vol est valide et pour dégrader le niveau de la loi de calcul si la valeur consolidée de l'au moins un paramètre de vol n'est pas valide. En particulier, la valeur consolidée de l'au moins un paramètre de vol est considérée valide si elle est cohérente avec des valeurs dudit au moins un paramètre de vol provenant des différents calculateurs primaires.

De façon avantageuse, le nombre de calculateurs primaires est égal à quatre calculateurs primaires répartis en deux calculateurs primaires du premier type et deux calculateurs primaires du deuxième type et, chacun des quatre calculateurs primaires est configuré pour déterminer que la valeur consolidée de l'au moins un paramètre de vol est valide lorsque la valeur consolidée de l'au moins un paramètre de vol est cohérente avec au moins une des valeurs dudit au moins un paramètre de vol provenant des calculateurs primaires du premier type et avec au moins une des valeurs dudit au moins un paramètre de vol provenant des calculateurs primaires du deuxième type.

Dans un troisième mode de réalisation, l'au moins un paramètre de vol de l'aéronef est un paramètre de type numérique représentatif d'un mode de fonctionnement d'un pilote automatique de l'aéronef, ce paramètre de type numérique étant susceptible de prendre un nombre fini de valeurs prédéterminées associées chacune à un mode de fonctionnement du pilote automatique de l'aéronef.

De façon avantageuse, l'algorithme de consolidation commun utilisé par les calculateurs primaires pour déterminer la valeur consolidée de l'au moins un paramètre de vol est configuré de façon à déterminer une valeur consolidée dudit au moins un paramètre de vol correspondant à une valeur majoritairement présente parmi les valeurs dudit au moins un paramètre de vol provenant des différents calculateurs primaires, si cette valeur correspond à au moins une des valeurs dudit au moins un paramètre de vol provenant des calculateurs primaires du premier type et à au moins une des valeurs dudit au moins un paramètre de vol provenant des calculateurs primaires du deuxième type.

L'invention est également relative à un aéronef comportant un système de commande de vol tel que précité.

DESCRIPTION DETAILLEE :

L'invention sera mieux comprise à la lecture de la description qui suit et à l'examen des figures annexées.

La figure 1 illustre de façon simplifiée un aéronef comportant un cockpit.
La figure 2 illustre de façon schématique un mode de réalisation, conforme à l'invention, d'un système de commande de vol d'un aéronef.

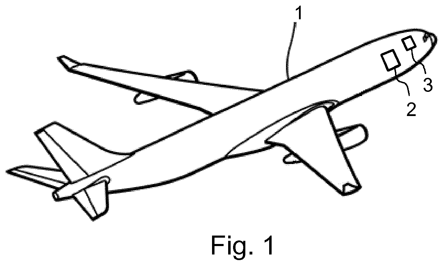

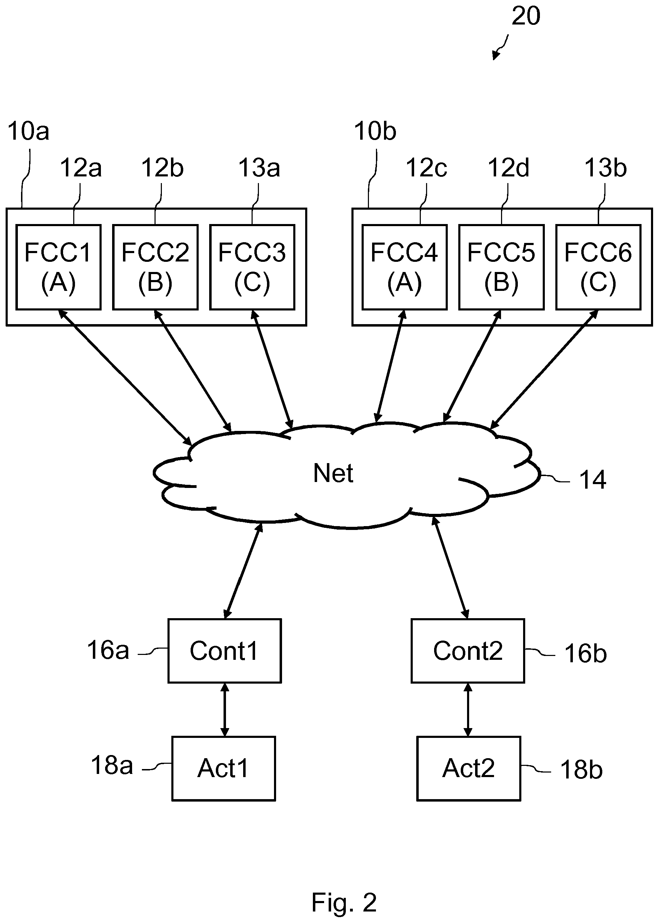

L'aéronef 1 représenté sur la figure 1 comporte un système de commande de vol 20 tel que représenté sur la figure 2. Ce système de commande de vol comprend un ensemble de calculateurs primaires 12a, 12b, 12c, 12d pour le calcul de commandes de vol de l'aéronef. De façon avantageuse, le système de commande de vol comporte en outre deux calculateurs secondaires 13a, 13b pour le calcul de commandes de vol. Les différents calculateurs sont libellés FCC1 à FCC6 sur la figure, pour « Flight Control Computer » en anglais. Ils sont par exemple situés dans une soute avionique 2 de l'aéronef. Les calculateurs sont répartis en deux groupes 10a (comprenant les calculateurs primaires 12a, 12b et le calculateur secondaire 13a) et 10b (comprenant les calculateurs primaires 12c, 12d et le calculateur secondaire 13b). Les deux groupes 10a et 10b sont localisés à des emplacements différents, par exemple situés de part et d'autre d'un axe longitudinal de l'aéronef, de façon à éviter des pannes communes. Les différents calculateurs sont reliés à un réseau de communication 14 de l'aéronef (libellé « Net » sur la figure). Le système de commande de vol 20 comporte également des contrôleurs 16a, 16b (libellés « Cont1 », « Cont2 » sur la figure) d'actionneurs 18a, 18b (libellés « Act1 », « Act2 » sur la figure). Ces actionneurs sont en particulier des actionneurs de gouvernes de l'aéronef. Les contrôleurs d'actionneurs sont également reliés au réseau de communication 14.

En fonctionnement, les calculateurs primaires 12a, 12b, 12c, 12d reçoivent des consignes de pilotage provenant d'organes de pilotage actionnés par un pilote dans un cockpit 3 de l'aéronef ou d'un système de pilotage automatique de l'aéronef. Le rôle des calculateurs est de calculer des commandes, appelées ordres de vol, à envoyer aux contrôleurs 16a, 16b des actionneurs 18a, 18b à partir des informations reçues des organes de pilotage (ou du système de pilotage automatique) et de paramètres de vol courants. Ce calcul obéit à une loi parmi un ensemble de lois possibles. Par défaut, le calcul est effectué selon une loi appelée loi normale. Les autres lois sont implémentées pour faire face à une dégradation des informations disponibles, par exemple en cas de perte de certains paramètres de vol à la suite de pannes éventuelles des appareils fournissant ces paramètres. Une succession de lois sont donc implémentées pour pallier à une dégradation de plus en plus importante des paramètres disponibles. En dernier recours, une loi dite directe transmet les consignes obtenues des organes de pilotage directement aux actionneurs, le pilotage étant alors entièrement contrôlé par le pilote sans modification. Les calculateurs secondaires 13a, 13b assurent la commande des actionneurs lorsque les calculateurs primaires ne sont plus opérationnels. Chaque calculateur exécute un logiciel dont le type est symbolisé par une lettre entre parenthèses sur la figure. Les calculateurs primaires 12a et 12c, d'un premier type, exécutent un premier logiciel, nommé « A », qui implémente l'ensemble des lois disponibles. Les calculateurs primaires 12b et 12d, d'un deuxième type, exécutent un second logiciel, nommé « B », qui implémente également l'ensemble des lois disponibles. Les calculateurs secondaires 13a et 13b exécutent un troisième logiciel, nommé « C » qui n'implémente que la loi directe. Le fait que les calculateurs soient de plusieurs types logiciels dissimilaires permet au système de commande de vol d'être robuste à une panne commune d'origine logicielle.

Les quatre calculateurs primaires 12a, 12b, 12c, 12d représentés sur la figure sont organisés pour former quatre couples commande/moniteur. Ces quatre couples sont par exemple les couples (FCC1, FCC5), (FCC2, FCC1), (FCC4, FCC2) et (FCC5, FCC4). Le premier calculateur du couple agit en mode commande et le second en mode moniteur. Chaque calculateur primaire participe à deux couples, une fois en tant qu'unité de commande et une fois en tant qu'unité de monitorage. De façon avantageuse, les unités de commande et de monitorage de chaque couple exécutent des logiciels dissimilaires. Les calculateurs secondaires forment un couple commande/moniteur particulier : le couple (FCC3, FCC6). Chaque couple de calculateur peut être vu comme un calculateur duplex commande/moniteur virtuel. Ces couples sont donnés à titre d'exemples, d'autres couples peuvent être formés par permutation et en fonction du nombre de calculateurs implémentés dans une solution particulière.

Chaque couple dispose avantageusement d'un état de validité calculé par chaque calculateur du couple. Selon l'exemple de réalisation, un calculateur du couple détermine la validité de ce couple selon les critères suivants :

- L'autre calculateur est perçu comme valide.
- Les deux calculateurs implémentent un logiciel différent.
- Les ordres de vol calculés par les deux calculateurs sont disponibles et calculés selon la même loi de vol.
- La différence en valeur absolue entre les deux ordres de vol calculés est inférieure à un seuil de tolérance.

Conformément à un mode de réalisation de l'invention, les quatre calculateurs primaires 12a, 12b, 12c, 12d font chacun l'acquisition d'une valeur d'au moins un paramètre de vol de l'aéronef nécessaire pour le calcul d'un ordre de vol. Chacun des calculateurs primaires transmet cette valeur de l'au moins un paramètre de vol, aux autres calculateurs primaires. Ainsi, chaque calculateur primaire dispose à la fois de la valeur de l'au moins un paramètre de vol qu'il a lui-même acquise, ainsi que des valeurs de l'au moins un paramètre de vol acquises par les trois autres calculateurs primaires. Chaque calculateur primaire détermine une valeur consolidée dudit au moins un paramètre de vol de l'aéronef en fonction de la valeur de l'au moins un paramètre de vol qu'il a lui-même acquise, ainsi que des valeurs de l'au moins un paramètre de vol acquises par les trois autres calculateurs primaires. Les différents calculateurs primaires 12a, 12b, 12c, 12d utilisent un même algorithme de consolidation pour calculer chacun une valeur consolidée de l'au moins un paramètre de vol. Les valeurs consolidées calculées par les différents calculateurs primaires sont ainsi calculées au moyen du même algorithme de consolidation : ces valeurs devraient donc être similaires. Chacun des calculateurs primaires calcule ensuite l'ordre de vol, au moyen d'une loi de calcul, en fonction de la valeur consolidée de l'au moins un paramètre de vol de l'aéronef. Etant donné que les ordres de vol calculés par les différents calculateurs primaires sont calculés en fonction de valeurs consolidées similaires pour les différents calculateurs primaires, les ordres de vol calculés par les différents calculateurs sont eux-mêmes censés être similaires. Par conséquent, chaque calculateur primaire réalise un calcul unique de l'ordre de vol, dont le résultat est utilisé aussi bien lorsqu'il agit en mode commande au sein du premier couple commande/moniteur virtuel que lorsqu'il agit en mode moniteur au sein du deuxième couple commande/moniteur virtuel. Il n'est plus nécessaire, comme dans l'art antérieur précité, de réaliser un premier calcul basé sur une première valeur consolidée du paramètre de vol (lorsque le calculateur primaire agit en mode commande au sein du premier couple commande/moniteur virtuel) et un deuxième calcul basé sur une deuxième valeur consolidée du paramètre de vol (lorsque le calculateur primaire agit en mode moniteur au sein du deuxième couple commande/moniteur virtuel). Cela est particulièrement avantageux car il en résulte une réduction importante de la charge de calcul des différents calculateurs primaires.

Dans un premier mode de réalisation, l'au moins un paramètre de vol de l'aéronef est un paramètre de type booléen tel qu'un changement de la valeur consolidée de l'au moins un paramètre de vol de l'aéronef correspond à une transition de la loi de calcul de l'ordre de vol. Ce paramètre de vol correspond par exemple à une phase de vol de l'aéronef (telle que roulage au sol, décollage, vol en montée, vol en croisière, vol en descente, atterrissage, etc.). Lors de l'atterrissage, un paramètre de vol de type booléen correspond par exemple à une condition d'engagement d'une loi de pilotage permettant de voler une phase d'arrondi (« Flare » en anglais) de la trajectoire de l'aéronef. Un passage d'une valeur FAUX à une valeur VRAI dudit paramètre de vol correspond à une transition de la loi de calcul de l'ordre de vol, d'une loi de descente vers la piste d'atterrissage, vers ladite loi permettant de voler une phase d'arrondi.

De façon avantageuse, l'algorithme de consolidation commun utilisé par les calculateurs primaires pour déterminer la valeur consolidée de l'au moins un paramètre de vol de type booléen est configuré de façon à déterminer une valeur consolidée dudit au moins un paramètre de vol correspondant à une transition de la loi de calcul de l'ordre de vol, lorsqu'au moins la moitié des valeurs dudit au moins un paramètre de vol de l'aéronef utilisées pour la consolidation, d'une part correspondent à une transition de la loi de calcul de l'ordre de vol et, d'autre part proviennent d'au moins un calculateur du premier type (exécutant un logiciel de type A) et d'au moins un calculateur du deuxième type (exécutant un logiciel de type B). Dans un exemple particulier de réalisation, une valeur de l'au moins un paramètre de vol correspond à une transition de la loi de calcul de l'ordre de vol lorsque cette valeur est égale à « VRAI ». L'algorithme de consolidation commun utilisé par les calculateurs primaires pour déterminer la valeur consolidée de l'au moins un paramètre de vol de type booléen est alors configuré de façon à déterminer la valeur consolidée dudit au moins un paramètre de vol en utilisant par exemple la formule suivante :

$$Vcon = (V1A\ OU\ V4A)\ ET\ (V2B\ OU\ V3C)$$

dans laquelle :

Vcon est la valeur consolidée dudit au moins un paramètre de vol,
V1A et V4A sont les valeurs dudit au moins un paramètre de vol provenant respectivement des deux calculateurs primaires 12a et 12c du premier type ; et
V2B et V3B sont les valeurs dudit au moins un paramètre de vol provenant respectivement des deux calculateurs primaires 12b et 12d du deuxième type.

La valeur de Vcon est VRAI lorsqu'au moins l'une des valeurs V1A ou V4A (provenant des calculateurs 12a, 12c du premier type) est VRAI et, au moins l'une des valeurs V2B ou V3B (provenant des calculateurs 12b, 12d du deuxième type) est VRAI.

D'autres formules peuvent être utilisées pour le calcul de la valeur consolidée, par exemple :

$$Vcon = (V1A\ OU\ V4A)\ OU\ (V2B\ OU\ V3C)$$

ou encore :

$$Vcon = (V1A\ ET\ V4A)\ OU\ (V2B\ ET\ V3C)$$

Les valeurs de l'au moins un paramètre de vol provenant d'un ou plusieurs autres calculateurs primaires peuvent parfois ne pas être disponibles du calculateur primaire considéré, par exemple en raison d'une pannes desdits autres calculateurs primaires ou en raison d'un problème de communication entre les calculateurs. Dans un tels cas, selon une première alternative, ces valeurs de l'au moins un paramètre de vol sont considérées égales à FAUX pour le calcul de la valeur consolidée. Selon une deuxième alternative, ces valeurs de l'au moins un paramètre de vol sont considérées égales à VRAI.

De façon avantageuse, lorsque seulement deux valeurs de l'au moins un paramètre de vol sont disponibles pour le calcul de la valeur consolidée, alors la valeur consolidée est égale à VRAI si ces deux valeurs sont égales à VRAI, quel que soit le type logiciel des calculateurs primaires ayant fait l'acquisition desdites valeurs. Le fait de ne pas tenir compte du type logiciel desdits calculateurs permet d'améliorer la disponibilité de la valeur consolidée. Lorsque moins de deux valeurs de l'au moins un paramètre de vol sont disponibles, le calculateur primaire ne calcule pas la valeur consolidée et il utilise une loi dégradée pour le calcul de l'ordre de vol.

Dans un deuxième mode de réalisation, l'au moins un paramètre de vol de l'aéronef est un paramètre de type numérique, par exemple une vitesse de l'aéronef, une altitude de l'aéronef, etc. Chacun des calculateurs primaires 12a, 12b, 12c, 12d détermine une valeur consolidée de l'au moins un paramètre de vol. Dans un exemple de réalisation, l'algorithme utilisé par un calculateur primaire pour déterminer cette valeur consolidée est le suivant :

- si 4 valeurs de l'au moins un paramètre de vol issues des différents calculateurs sont disponibles pour ce calculateur, alors la valeur consolidée correspond à la seconde, dans l'ordre croissant, desdites 4 valeurs ;
- si 3 valeurs de l'au moins un paramètre de vol issues des différents calculateurs sont disponibles pour ce calculateur, alors la valeur consolidée correspond à la valeur médiane desdites 3 valeurs ;
- si 2 valeurs de l'au moins un paramètre de vol issues des différents calculateurs sont disponibles pour ce calculateur, alors la valeur consolidée correspond à la valeur moyenne desdites 2 valeurs ;
- si moins de 2 valeurs de l'au moins un paramètre de vol issues des différents calculateurs sont disponibles pour ce calculateur, alors le calculateur primaire ne détermine pas la valeur consolidée et il utilise une loi dégradée pour le calcul de l'ordre de vol.

Chacun des calculateurs primaires 12a, 12b, 12c, 12d détermine en outre si la valeur consolidée ainsi déterminée est valide, c'est-à-dire si elle est cohérente avec les valeurs dudit au moins un paramètre de vol provenant des différents calculateurs primaires. Le calculateur primaire utilise une loi dégradée pour le calcul de l'ordre de vol si la valeur consolidée de l'au moins un paramètre de vol n'est pas valide. De façon particulière, la valeur consolidée est déterminée cohérente d'une valeur du paramètre de vol si une distance entre la valeur consolidée et cette valeur du paramètre de vol est inférieure à un seuil prédéterminé pendant un intervalle de temps déterminé. De façon avantageuse, la valeur consolidée de l'au moins un paramètre de vol est déterminée valide lorsque la valeur consolidée de l'au moins un paramètre de vol est cohérente avec au moins une des valeurs dudit au moins un paramètre de vol provenant des calculateurs primaires 12a, 12c du premier type et avec au moins une des valeurs dudit au moins un paramètre de vol provenant des calculateurs primaires 12b, 12d du deuxième type. De façon particulière, lorsque seulement deux valeurs de l'au moins un paramètre de vol issues des différents calculateurs sont disponibles pour ce calculateur, alors la valeur consolidée de l'au moins un paramètre de vol est déterminée valide lorsqu'elle est cohérente avec ces deux valeurs, quel que soit le type logiciel des calculateurs primaires ayant fait l'acquisition desdites valeurs. Le fait de ne pas tenir compte du type logiciel desdits calculateurs permet d'améliorer la disponibilité de la valeur consolidée.

Dans un troisième mode de réalisation, l'au moins un paramètre de vol de l'aéronef est un paramètre de type numérique représentatif d'un mode de fonctionnement d'un pilote automatique de l'aéronef. Ce paramètre de type numérique est susceptible de prendre un nombre fini de valeurs prédéterminées associées chacune à un mode de fonctionnement du pilote automatique de l'aéronef. Le mode de fonctionnement courant du pilote automatique correspond en particulier à un mode dit « engagé » du pilote automatique, dont la valeur est par exemple fournie par un système FCU (« Flight Control Unit » en anglais) du cockpit de l'aéronef.

De façon avantageuse, l'algorithme de consolidation commun utilisé par les calculateurs primaires pour déterminer la valeur consolidée de l'au moins un paramètre de vol détermine une valeur consolidée dudit au moins un paramètre de vol correspondant à une valeur majoritairement présente parmi les valeurs dudit au moins un paramètre de vol provenant des différents calculateurs primaires, si cette valeur correspond à au moins une des valeurs dudit au moins un paramètre de vol provenant des calculateurs primaires du premier type et à au moins une des valeurs dudit au moins un paramètre de vol provenant des calculateurs primaires du deuxième type. Lorsqu'il n'existe pas une valeur majoritairement présente parmi les valeurs de l'au moins un paramètre de vol, mais plusieurs valeurs représentées à égalité, alors la valeur consolidée correspond à celle desdites valeurs représentées à égalité représentative d'un mode de fonctionnement le plus prioritaire du pilote automatique, un ordre de priorité étant associé à chacun des différents modes de fonctionnement du pilote automatique.

Lorsque la valeur consolidée correspond à un mode de fonctionnement du pilote automatique différent du mode engagé courant, alors le calculateur primaire choisit ce mode de fonctionnement comme nouveau mode engagé du pilote automatique, puis il calcule les ordres de vol des actionneurs 18a, 18b en fonction dudit nouveau mode engagé du pilote automatique.

Dans un mode particulier de réalisation, lorsque les valeurs issues d'au moins 3 calculateurs primaires sont disponibles pour déterminer la valeur consolidée, si la valeur déterminée ne correspond pas à au moins une des valeurs de l'au moins un paramètre de vol provenant des calculateurs primaires du premier type et à au moins une des valeurs de l'au moins un paramètre de vol provenant des calculateurs primaires du deuxième type, alors le calculateur primaire conserve inchangé le mode engagé courant du pilote automatique.

Le système de commande de vol 20 a été décrit dans le cas particulier de l'exemple représenté sur la figure 2, comportant 4 calculateurs primaires. Cet exemple n'est pas limitatif de l'invention. En effet, selon d'autres modes de réalisation conformes à l'invention, le système de commande de vol peut comporter un nombre plus élevé de calculateurs primaires, par exemple 6 ou 8 calculateurs primaires. Ceux-ci fonctionnent alors, par exemple, selon les mêmes principes que ceux utilisés pour les 4 calculateurs 12a, 12b, 12c, 12d du système décrit précédemment. Dans le cas d'un système comportant 6 calculateurs primaires, ceux-ci peuvent être de deux ou trois types logiciels différents. Dans le cas d'un système comportant 8 calculateurs primaires, ceux-ci peuvent être de deux, trois ou quatre types logiciels différents.

## Revendications

1. Système de commande de vol (20) d'un aéronef (1) comprenant un ensemble d'au moins quatre calculateurs primaires (12a, 12b, 12c, 12d) pour le calcul de commandes de vol de l'aéronef, reliés entre eux par un réseau de communication (14), dans lequel chacun des au moins quatre calculateurs primaires est configuré pour calculer un ordre de vol destiné à un contrôleur distant (16a, 16b) d'un actionneur de gouverne (18a, 18b) de l'aéronef, chacun des calculateurs primaires participant :

   - en mode commande au sein d'un premier couple commande/moniteur virtuel constitué dudit calculateur et d'un premier des autres calculateurs primaires agissant en mode moniteur pour le compte dudit premier couple commande/moniteur virtuel ; et
   - en mode moniteur au sein d'un deuxième couple commande/moniteur virtuel constitué dudit calculateur et

EP 3 385 809 B1

d'un deuxième des autres calculateurs primaires agissant en mode commande pour le compte dudit deuxième couple commande/moniteur virtuel,

dans lequel l'ordre de vol est calculé par chacun des au moins quatre calculateurs primaires en fonction d'au moins un paramètre de vol de l'aéronef, **caractérisé en ce que** chacun desdits au moins quatre calculateurs primaires est configuré pour :

- acquérir une valeur de l'au moins un paramètre de vol de l'aéronef, transmettre cette valeur aux autres calculateurs primaires et recevoir des valeurs de l'au moins un paramètre de vol de l'aéronef transmises par les autres calculateurs primaires ;
- déterminer une valeur consolidée dudit au moins un paramètre de vol de l'aéronef en fonction de la valeur acquise dudit au moins un paramètre de vol de l'aéronef et des valeurs dudit au moins un paramètre de vol de l'aéronef reçues des autres calculateurs primaires, en utilisant un algorithme de consolidation commun également utilisé par les autres calculateurs primaires pour déterminer chacun une valeur consolidée dudit au moins un paramètre de vol de l'aéronef ;
- calculer l'ordre de vol destiné au contrôleur distant (16a, 16b), au moyen d'une loi de calcul, en fonction de la valeur consolidée dudit au moins un paramètre de vol de l'aéronef, selon un calcul unique dont le résultat est utilisé par le calculateur aussi bien lorsqu'il agit en mode commande au sein du premier couple commande/moniteur virtuel que lorsqu'il agit en mode moniteur au sein du deuxième couple commande/moniteur virtuel.

2. Système selon la revendication 1, **caractérisé en ce que** les calculateurs primaires sont d'au moins deux types (A, B), un premier type de calculateurs primaires mettant en œuvre un logiciel d'un premier type (A) pour implémenter la loi de calcul de l'ordre de vol et, un deuxième type de calculateurs primaires mettant en œuvre un logiciel d'un deuxième type (B) pour implémenter la loi de calcul de l'ordre de vol, le logiciel du premier type et le logiciel du deuxième type étant dissimilaires.

3. Système selon la revendication 2, **caractérisé en ce que**, l'au moins un paramètre de vol de l'aéronef est un paramètre de type booléen tel qu'un changement de la valeur consolidée de l'au moins un paramètre de vol de l'aéronef correspond, **en ce qu'**il l'entraîne, à une transition de la loi de calcul de l'ordre de vol.

4. Système selon la revendication 3, **caractérisé en ce que** l'algorithme de consolidation commun utilisé par les calculateurs primaires pour déterminer la valeur consolidée de l'au moins un paramètre de vol de type booléen est configuré de façon à déterminer une valeur consolidée dudit au moins un paramètre de vol correspondant à une transition de la loi de calcul de l'ordre de vol, lorsqu'au moins la moitié des valeurs dudit au moins un paramètre de vol de l'aéronef utilisées pour la consolidation, d'une part correspondent à une transition de la loi de calcul de l'ordre de vol et, d'autre part proviennent d'au moins un calculateur du premier type et d'au moins un calculateur du deuxième type.

5. Système selon la revendication 4, **caractérisé en ce qu'**une valeur dudit au moins un paramètre de vol correspond à une transition de la loi de calcul de l'ordre de vol lorsque cette valeur est égale à « VRAI », **en ce que** le nombre de calculateurs primaires est égal à quatre calculateurs primaires répartis en deux calculateurs primaires du premier type et deux calculateurs primaires du deuxième type et, **en ce que** l'algorithme de consolidation commun utilisé par les calculateurs primaires pour déterminer la valeur consolidée de l'au moins un paramètre de vol de type booléen est configuré de façon à déterminer la valeur consolidée dudit au moins un paramètre de vol en utilisant la formule suivante :

$$Vcon = (V1A \text{ OU } V4A) \text{ ET } (V2B \text{ OU } V3C)$$

dans laquelle :

Vcon est la valeur consolidée dudit au moins un paramètre de vol,
V1A et V4A sont les valeurs dudit au moins un paramètre de vol provenant respectivement des deux calculateurs primaires du premier type ; et
V2B et V3B sont les valeurs dudit au moins un paramètre de vol provenant respectivement des deux calculateurs primaires du deuxième type.

8

**6.** Système selon la revendication 2, **caractérisé en ce que** l'au moins un paramètre de vol de l'aéronef est un paramètre de type numérique et chacun des au moins quatre calculateurs primaires est configuré pour déterminer si la valeur consolidée de l'au moins un paramètre de vol est valide et pour dégrader le niveau de la loi de calcul si la valeur consolidée de l'au moins un paramètre de vol n'est pas valide.

**7.** Système selon la revendication 6, **caractérisé en ce que** le nombre de calculateurs primaires est égal à quatre calculateurs primaires répartis en deux calculateurs primaires du premier type et deux calculateurs primaires du deuxième type et, **en ce que** chacun des quatre calculateurs primaires est configuré pour déterminer que la valeur consolidée de l'au moins un paramètre de vol est valide lorsque la valeur consolidée de l'au moins un paramètre de vol est cohérente avec au moins une des valeurs dudit au moins un paramètre de vol provenant des calculateurs primaires du premier type et avec au moins une des valeurs dudit au moins un paramètre de vol provenant des calculateurs primaires du deuxième type.

**8.** Système selon la revendication 2, **caractérisé en ce que** l'au moins un paramètre de vol de l'aéronef est un paramètre de type numérique représentatif d'un mode de fonctionnement d'un pilote automatique de l'aéronef, ce paramètre de type numérique étant susceptible de prendre un nombre fini de valeurs prédéterminées associées chacune à un mode de fonctionnement du pilote automatique de l'aéronef.

**9.** Système selon la revendication 8, **caractérisé en ce que** l'algorithme de consolidation commun utilisé par les calculateurs primaires pour déterminer la valeur consolidée de l'au moins un paramètre de vol est configuré de façon à déterminer une valeur consolidée dudit au moins un paramètre de vol correspondant à une valeur majoritairement présente parmi les valeurs dudit au moins un paramètre de vol provenant des différents calculateurs primaires, si cette valeur correspond à au moins une des valeurs dudit au moins un paramètre de vol provenant des calculateurs primaires du premier type et à au moins une des valeurs dudit au moins un paramètre de vol provenant des calculateurs primaires du deuxième type.

**10.** Aéronef comportant un système de commande de vol (20) selon l'une quelconque des revendications 1 à 9.

**Patentansprüche**

**1.** Flugsteuerungssystem (20) eines Luftfahrzeugs (1) umfassend eine Anordnung von mindestens vier Primärrechnern (12a, 12b, 12c, 12d) für die Berechnung von Flugsteuerbefehlen des Luftfahrzeugs, die durch ein Kommunikationsnetz (14) miteinander verbunden sind, wobei jeder der mindestens vier Primärrechner dazu bestimmt ist, einen Flugsteuerbefehl zu berechnen, der für eine entfernte Steuerung (16a, 16b) eines Ruderaktors (18a, 18b) des Luftfahrzeugs bestimmt ist, wobei jeder der Primärrechner wie folgt beteiligt ist:

- im Steuerungsmodus innerhalb eines ersten virtuellen Steuerungs-/Überwachungs-Paars, das von dem Rechner und einem ersten der anderen Primärrechner gebildet ist, der im Auftrag des ersten virtuellen Steuerungs-/Überwachungs-Paars im Überwachungsmodus agiert; und
- im Überwachungsmodus innerhalb eines zweiten virtuellen Steuerungs-/Überwachungs-Paars, das von dem Rechner und einem zweiten der anderen Primärrechner gebildet ist, der im Auftrag des zweiten virtuellen Steuerungs-/Überwachungs-Paars im Steuerungsmodus agiert, wobei der Flugsteuerbefehl durch jeden der mindestens vier Primärrechner in Abhängigkeit von mindestens einem Flugparameter des Luftfahrzeugs berechnet wird, **dadurch gekennzeichnet, dass** jeder der mindestens vier Primärrechner dazu ausgebildet ist:
- einen Wert des mindestens einen Flugparameters des Luftfahrzeugs zu erfassen, diesen Wert an die anderen Primärrechner zu übertragen und Werte des mindestens einen Flugparameters des Luftfahrzeugs zu empfangen, die durch die anderen Primärrechner übertragen werden;
- einen konsolidierten Wert des mindestens einen Flugparameters des Luftfahrzeugs in Abhängigkeit von dem erfassten Wert des mindestens einen Flugparameters des Luftfahrzeugs und den Werten des mindestens einen Flugparameters des Luftfahrzeugs, die von den anderen Primärrechnern empfangen werden, mithilfe eines gemeinsamen Konsolidierungsalgorithmus zu bestimmen, der ebenfalls von den anderen Primärrechnern dafür genutzt wird, jeweils einen konsolidierten Wert des mindestens einen Flugparameters des Luftfahrzeugs zu bestimmen;
- den Flugsteuerbefehl, der für die entfernte Steuerung (16a, 16b) bestimmt ist, mittels eines Rechengesetzes in Abhängigkeit von dem konsolidierten Wert des mindestens einen Flugparameters des Luftfahrzeugs gemäß einer eindeutigen Berechnung zu berechnen, deren Ergebnis von dem Rechner sowohl dann genutzt wird, wenn er im Steuerungsmodus innerhalb des ersten virtuellen Steuerungs-/Überwachungs-Paars agiert, als auch dann, wenn er im Überwachungsmodus innerhalb des zweiten virtuellen Steuerungs-/Überwachungs-Paars agiert.

2. System nach Anspruch 1, **dadurch gekennzeichnet, dass** die Primärrechner von mindestens zwei Typen (A, B) sind, wobei ein erster Primärrechnertyp eine Software eines ersten Typs (A) ausführt, um das Rechengesetz des Flugsteuerbefehls zu implementieren, und ein zweiter Primärrechnertyp eine Software eines zweiten Typs (B) ausführt, um das Rechengesetz des Flugsteuerbefehls zu implementieren, wobei die Software des ersten Typs und die Software des zweiten Typs ungleichartig sind.

3. System nach Anspruch 2, **dadurch gekennzeichnet, dass** der mindestens eine Flugparameter des Luftfahrzeugs ein Parameter des booleschen Typs ist, so dass eine Änderung des konsolidierten Werts des mindestens einen Flugparameters des Luftfahrzeugs darin einem Übergang des Rechengesetzes des Flugsteuerbefehls entspricht, dass sie ihn verursacht.

4. System nach Anspruch 3, **dadurch gekennzeichnet, dass** der gemeinsame Konsolidierungsalgorithmus, der von den Primärrechnern dafür genutzt wird, den konsolidierten Wert des mindestens einen Flugparameters des booleschen Typs zu bestimmen, dazu ausgebildet ist, einen konsolidierten Wert des mindestens einen Flugsteuerbefehls zu bestimmen, der einem Übergang des Rechengesetzes des Flugsteuerbefehls entspricht, wenn zumindest die Hälfte der Werte des mindestens einen Flugparameters des Luftfahrzeugs, die zur Konsolidierung genutzt werden, einerseits einem Übergang des Rechengesetzes des Flugsteuerbefehls entsprechen und andererseits von mindestens einem Rechner des ersten Typs und mindestens einem Rechner des zweiten Typs stammen.

5. System nach Anspruch 4, **dadurch gekennzeichnet, dass** ein Wert des mindestens einen Flugparameters darin einem Übergang des Rechengesetzes des Flugsteuerbefehls entspricht, wenn dieser Wert gleich "WAHR" ist, dadurch, dass die Anzahl von Primärrechnern gleich vier Primärrechnern ist, die in zwei Primärrechner des ersten Typs und zwei Primärrechner des zweiten Typs aufgeteilt sind, und dadurch, dass dass der gemeinsame Konsolidierungsalgorithmus, der von den Primärrechnern dafür genutzt wird, den konsolidierten Wert des mindestens einen Flugparameters des booleschen Typs zu bestimmen, dazu ausgebildet ist, den konsolidierten Wert des mindestens einen Flugparameters mithilfe der folgenden Formel zu bestimmen:

$$Vcon = (V1A\ ODER\ V4A)\ UND\ (V2B\ ODER\ V3B)$$

wobei:

Vcon der konsolidierte Wert des mindestens einen Flugparameters ist,
V1A und V4A die Werte des mindestens einen Flugparameters sind, die jeweils von den zwei Primärrechnern des ersten Typs stammen; und
V2B und V3B die Werte des mindestens einen Flugparameters sind, die jeweils von den zwei Primärrechnern des zweiten Typs stammen.

6. System nach Anspruch 2, **dadurch gekennzeichnet, dass** der mindestens eine Flugparameter des Luftfahrzeugs ein Parameter des numerischen Typs und jeder der mindestens vier Primärrechner dazu ausgebildet ist, zu bestimmen, ob der konsolidierte Wert des mindestens einen Flugparameters gültig ist, und das Niveau des Rechengesetzes herabzustufen, wenn der konsolidierte Wert des mindestens einen Flugparameters nicht gültig ist.

7. System nach Anspruch 6, **dadurch gekennzeichnet, dass** die Anzahl von Primärrechnern gleich vier Primärrechnern ist, die in zwei Primärrechner des ersten Typs und zwei Primärrechner des zweiten Typs aufgeteilt sind, und dadurch, dass jeder der vier Primärrechner dazu ausgebildet ist, zu bestimmen, dass der konsolidierte Wert des mindestens einen Flugparameters gültig ist, wenn der konsolidierte Wert des mindestens einen Flugparameters mit mindestens einem der Werte des mindestens einen Flugparameters, der von den Primärrechnern des ersten Typs stammt, und mit mindestens einem der Werte des mindestens einen Flugparameters, der von den Primärrechnern des zweiten Typs stammt, in Einklang steht.

8. System nach Anspruch 2, **dadurch gekennzeichnet, dass** der mindestens eine Flugparameter des Luftfahrzeugs ein Parameter des numerischen Typs ist, der für einen Betriebsmodus eines Autopiloten des Luftfahrzeugs repräsentativ ist, wobei dieser Parameter des numerischen Typs geeignet ist, eine endliche Zahl von vorbestimmten Werten anzunehmen, die jeweils einem Betriebsmodus des Autopiloten des Luftfahrzeugs zugeordnet sind.

9. System nach Anspruch 8, **dadurch gekennzeichnet, dass** der gemeinsame Konsolidierungsalgorithmus, der von den Primärrechnern dafür genutzt wird, den konsolidierten Wert des mindestens einen Flugparameters zu bestimmen, dazu ausgebildet ist, einen konsolidierten Wert des mindestens einen Flugparameters zu bestimmen, der einem Wert entspricht, der mehrheitlich unter den Werten des mindestens einen Flugparameters vorhanden ist, der von den verschiedenen Primärrechnern stammt, wenn dieser Wert mindestens einem der Werte des mindestens einen Flugparameters, der von den Primärrechnern des ersten Typs stammt, und mindestens einem der Werte des mindestens einen Flugparameters, der von den Primärrechnern des zweiten Typs stammt, entspricht.

10. Luftfahrzeug aufweisend ein Flugsteuerungssystem (20) nach einem der Ansprüche 1 bis 9.

**Claims**

1. Flight control system (20) for an aircraft (1), comprising a set of at least four primary computers (12a, 12b, 12c, 12d) for computing flight commands for the aircraft, said computers being connected to one another by a communication network (14), wherein each one of the at least four primary computers is configured to compute a flight order intended for a remote controller (16a, 16b) of a control surface actuator (18a, 18b) of the aircraft, each one of the primary computers participating:

   - in command mode, in a first virtual command/monitor pair, which consists of said computer and of a first one of the other primary computers acting in monitor mode for said first virtual command/monitor pair; and
   - in monitor mode, in a second virtual command/monitor pair, which consists of said computer and of a second one of the other primary computers acting in command mode for said second virtual command/monitor pair,

   wherein the flight order is computed by each one of the at least four primary computers on the basis of at least one flight parameter of the aircraft,
   **characterized in that** each one of said at least four primary computers is configured to:

   - acquire a value of the at least one flight parameter of the aircraft, transmit this value to the other primary computers and receive values of the at least one flight parameter of the aircraft that are transmitted by the other primary computers;
   - determine a consolidated value of said at least one flight parameter of the aircraft on the basis of the acquired value of said at least one flight parameter of the aircraft and the values of said at least one flight parameter of the aircraft that are received from the other primary computers, by using a common consolidation algorithm that is also used by the other primary computers in order each to determine a consolidated value of said at least one flight parameter of the aircraft;
   - compute the flight order intended for the remote controller (16a, 16b) by means of a computation law, on the basis of the consolidated value of said at least one flight parameter of the aircraft, using a single computation, the result of which is used by the computer both when it acts in command mode in the first virtual command/monitor pair and when it acts in monitor mode in the second virtual command/monitor pair.

2. System according to Claim 1, **characterized in that** the primary computers are of at least two types (A, B), a first type of primary computer employing software of a first type (A) in order to implement the flight order computation law, and a second type of primary computer employing software of a second type (B) in order to implement the flight order computation law, the software of the first type and the software of the second type differing from one another.

3. System according to Claim 2, **characterized in that** the at least one flight parameter of the aircraft is a Boolean parameter such that a change in the consolidated value of the at least one flight parameter of the aircraft corresponds, **in that** it causes it, to a transition of the flight order computation law.

4. System according to Claim 3, **characterized in that** the common consolidation algorithm used by the primary computers to determine the consolidated value of the at least one Boolean flight parameter is configured so as to determine a consolidated value of said at least one flight parameter that corresponds to a transition of the flight order computation law when at least half the values of said at least one flight parameter of the aircraft that are used for the consolidation not only correspond to a transition of the flight order computation law but also originate from at least one computer of the first type and from at least one computer of the second type.

5. System according to Claim 4, **characterized in that** a value of said at least one flight parameter corresponds to a transition of the flight order computation law when this value is equal to "TRUE", **in that** the number of primary computers is equal to four primary computers that are split into two primary computers of the first type and two primary computers of the second type, and **in that** the common consolidation algorithm used by the primary computers to determine the consolidated value of the at least one Boolean flight parameter is configured so as to determine the consolidated value of said at least one flight parameter by using the following formula:

$$Vcon = (V1A\ OR\ V4A)\ AND\ (V2B\ OR\ V3B)$$

   in which:

   Vcon is the consolidated value of said at least one flight parameter,
   V1A and V4A are the values of said at least one flight parameter originating from the two primary computers of the first type, respectively; and
   V2B and V3B are the values of said at least one flight parameter originating from the two primary computers of the second type, respectively.

6. System according to Claim 2, **characterized in that** the at least one flight parameter of the aircraft is a numerical parameter, and each one of the at least four primary computers is configured to determine whether the consolidated value of the at least one flight parameter is valid and to downgrade the level of the computation law if the consolidated value of the at least one flight parameter is not valid.

7. System according to Claim 6, **characterized in that** the number of primary computers is equal to four primary computers split into two primary computers of the first type and two primary computers of the second type, and **in that** each one of the four primary computers is configured to determine that the consolidated value of the at least one flight parameter is valid when the consolidated value of the at least one flight parameter is consistent with at least one of the values of said at least one flight parameter originating from the primary computers of the first type and with at least one of the values of said at least one flight parameter originating from the primary computers of the second type.

8. System according to Claim 2, **characterized in that** the at least one flight parameter of the aircraft is a numerical parameter representative of a mode of operation of an automatic pilot of the aircraft, this numerical parameter being capable of assuming a finite number of predetermined values, each of which is associated with a mode of operation of the automatic pilot of the aircraft.

9. System according to Claim 8, **characterized in that** the common consolidation algorithm used by the primary computers to determine the consolidated value of the at least one flight parameter is configured so as to determine a consolidated value of said at least one flight parameter that corresponds to a value that features predominantly among the values of said at least one flight parameter originating from the various primary computers if this value corresponds to at least one of the values of said at least one flight parameter originating from the primary computers of the first type and to at least one of the values of said at least one flight parameter originating from the primary computers of the second type.

10. Aircraft including a flight control system (20) according to any one of Claims 1 to 9.

Fig. 1

20

10a

12a 12b 13a

| FCC1 (A) | FCC2 (B) | FCC3 (C) |

10b

12c 12d 13b

| FCC4 (A) | FCC5 (B) | FCC6 (C) |

Net

14

16a — Cont1

Cont2 — 16b

18a — Act1

Act2 — 18b

Fig. 2

## RÉFÉRENCES CITÉES DANS LA DESCRIPTION

**Documents brevets cités dans la description**

- FR 2996651 A1